# EUROPEAN PATENT SPECIFICATION

(11) **EP 0 608 102 B1**
(45) Date of publication and mention of the grant of the patent: **01.04.1998**
(21) Application number: 94300339.2
(22) Date of filing: 18.01.1994
(51) Int. Cl.: B65B 59/00

(54) **Pair of adjustable flight bars for a machine for advancing packages and method of adjustment**
Paar von einstellbaren Mitnehmerstäben für eine Maschine zum Transport von Verpackungen und Verfahren zum Einstellen
Paire de barres ajustables pour une machine de transport d'emballages et procédé d'ajustement

(30) Priority: 19.01.1993 US 108918; 19.08.1993 US 5349
(43) Date of publication of application: 27.07.1994
(60) Divisional application: 97103512.6
(73) Proprietor: THE MEAD CORPORATION, Dayton Ohio 45463 (US)
(72) Inventor: Calvert, Rodney K., Dunwoody, Georgia 30338 (US); Fishback, Alton J., Austell, Georgia 30001 (US); VanHorne, George R., Atlanta, Georgia 30306 (US)
(74) Representative: Hepworth, John Malcolm

(56) References cited:
- EP-A- 0 485 762
- GB-A- 1 033 743

## Description

This invention relates generally to the loading of articles such as cans or bottles into end-loading sleeve type cartons. More particularly, the invention is concerned with an arrangement for varying the distance of an adjacent pair of flight bars so as to render the system adjustable for use with packages of different depths as measured in the direction of movement of the packages.

U.S. patent 4,237,673 issued December 9, 1980 discloses an arrangement wherein open ended sleeve type cartons are moved along a predetermined path while containers to be loaded into the cartons are fed at an acute angle to the path of movement of the cartons by transverse flight bars which are provided with wedge shaped end portions to facilitate a container grouping function. The flight bars also act as efficient means for driving the incoming items inwardly toward the path of movement of the open ended cartons so as to load the articles into one or both ends of the carton.

U.S. patent 5, 176,612 issued January 5, 1993 discloses a machine for feeding open ended sleeve type cartons from a hopper and for manipulating such cartons into set up condition and thereafter for depositing the cartons onto conveyor means having transverse flight bars engageable with the leading and trailing parts of the set up cartons.

EPA 485 762 discloses a conveyor device in a packaging machine which has front and rear dogs mounted on endless parallel conveyor chains. The chains are adjusted manually to vary the distance between front and rear dogs and to increase the spacing between the rear dogs to enable cartons of different sizes to be conveyed.

In order to adapt presently known flight bar systems for use in conjunction with packages of different horizontal dimensions in the direction of package movement it has been necessary to remove existing flight bars from the machine to substitute such bars by other flight bars having different dimensions and tip angles than the original flight bars. Similarly it is known to adjust the spacing between adjacent flight bars by, for example, removing detachable strip portion of the flight bars which renders a packaging system useable with larger packages, such detachable strips being removed individually from all the flight bars. Alternatively, such strips may be added to the flight bars to decrease the spacing there between for use with smaller size packages.

Either of these known methods of adapting a machine for use for different size packages is very time consuming and expensive and requires the services of a knowledgeable operator or mechanic.

One aspect of the present invention provides a method of adjusting the spacing between an adjacent pair of flight bars as mainly claimed in claim 1. Preferably, said leading and trailing components are pivotally connected together whereby they are pivoted towards or away from one another to alter the distance between the flight bars. It is also a preferred feature of this aspect of the invention that the leading and trailing components remain substantially parallel to one another during said relative shifting. A further preferred feature is that a series of such flight bars are adjusted simultaneously.

According to another aspect of the invention there is provided a flight bar assembly for use in advancing packages sequentially along a predetermined path as mainly claimed in claim 5. Preferably, the leading and trailing components are pivotally connected for movement substantially parallel to one another.

According to one feature of this aspect of the invention, there may be provided a flight bar assembly for advancing packages in sequence along a predetermined path, each of said flight bars having a leading component and a trailing component, a first endless driving element connected to each of said leading components to move said leading components along said predetermined path, and a second endless driving element connected to each of said trailing components to move said trailing components along said predetermined path, said first and second driving elements being movable in synchronism so as to impart movement to packages along said predetermined path, means for imparting controlled relative movement to said first and second driving elements so as to vary the distance between the trailing component of a flight bar and the leading component of an immediately succeeding flight bar thereby to render the system adaptable for advancing packages of different horizontal dimensions in the direction of movement of the flight bars along said predetermined path, and characterized by means for interconnecting said leading and trailing components with each other to limit relative movement therebetween within a predetermined range.

According to another feature of this aspect of the invention, a plurality of end plates are pivotally connected with each said flight bar leading components near each end thereof and a pin is secured to each of said trailing components near each end thereof and wherein each of said end plates includes a slot in which the adjacent pin is slidably disposed.

Preferably, each end of each of said leading components is configured in the form of the correct metering angle for product entry into the space between adjacent flight bars.

Optionally, said slot is disposed at an angle which results in the disposition of said end plate in such a position that an edge of said end plate forms the correct metering angle for product entry into the space between adjacent flight bars.

A flight bar assembly in a packaging machine will now be described, by way of example, with reference to the accompanying drawings, in which:-
FIG.1 is a perspective view of the infeed end of a packaging machine similar to that disclosed in the aforementioned U.S. patent 5, 176,612;
FIG.2 is a plan view of a pair of flight bar units of a series according to this invention in which leading and trailing components of each flight bar are hinged apart to decrease the spacing between the units;
FIG.3 is a view similar to FIG.2 but shows the leading and trailing components of the flight bars closed in face to face relationship with each other thereby to increase the spacing between the units;
FIG.4 is an enlarged view of the end portion of a leading and trailing component together with drive chains;
FIG.5 is a cross-sectional view taken along the line 5-5 as shown in FIG.4;
FIG.6 is a cross sectional view taken along the line 6-6 in FIG.4;
FIG.7 is a schematic representation of the system drive components, and;
FIG.8 is a schematic representation of a known form of speed reducer.

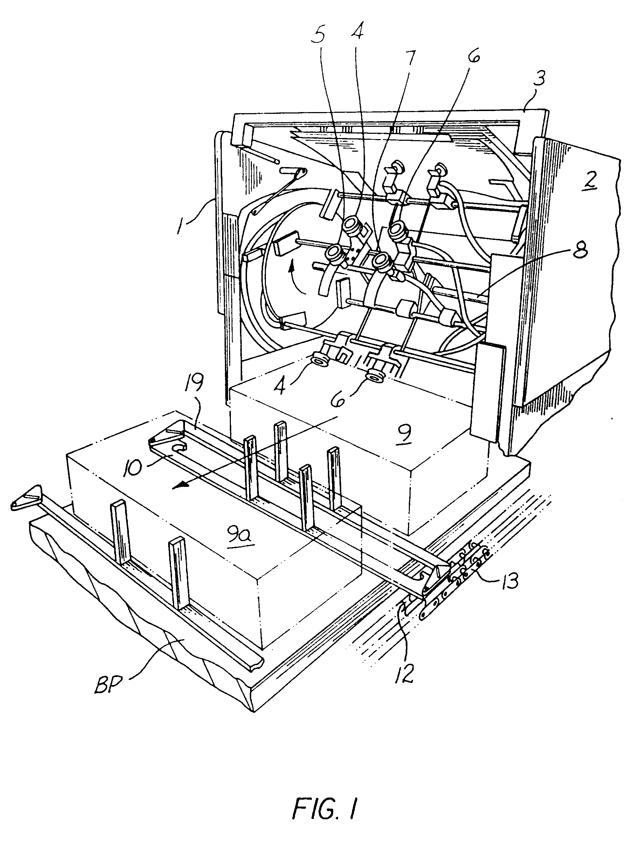

The structure shown in FIG.1 is similar in some respects to FIG.1 of the aforementioned U.S. patent 5,176,612. Hence, a pair of side frame support panels 1 and 2 are provided and the lower portion of a hopper is disposed atop a crossbar 3 shown in conjunction with a few collapsed cartons which are to be withdrawn from the hopper and set up into open ended condition by suction clips such as 4, 5, 6 and 7. The suction clip assembly is rotatable about main shaft 8 to engage and withdraw the lowermost carton from the hopper and to manipulate the carton panels into set up condition as best shown in the aforementioned U.S. patent 5,176,612 issued January 5, 1993. The cartons 9 and 9a are separated by a flight bar formed according to this invention and which includes a leading component 10 and a trailing component 19. The leading component is driven by a pair of endless driving elements such as a pair of chains one of which is designated by the numeral 13 and the other of which is not shown in FIG.1. Similarly, trailing component 19 is movable by virtue of its connection with endless chain 12 and by a similar chain not shown in FIG.1 but which cooperates with the opposite end of trailing component 19.

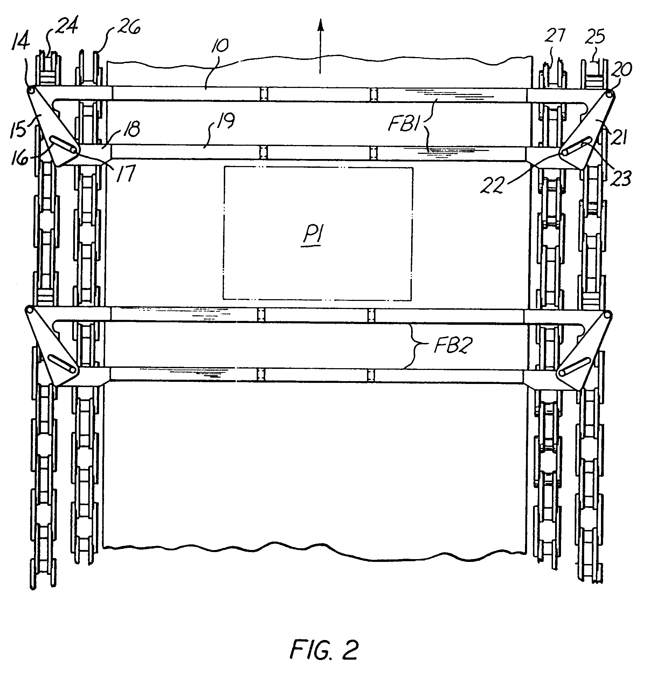

Means for interconnecting the leading and trailing components is provided so as to limit relative movement therebetween within a predetermined range. Thus, as best shown in FIG.2, leading component 10 is pivotally mounted at pivot 14 to end plate 15 having a slot 16 formed therein which receives a pin 17 secured to an end part 18 of the trailing component 19. The right hand end of leading component 10 of flight bar FB1 is similarly pivotally connected at pivot 20 to end plate 21. A pin 22 is mounted on the right hand end of trailing component 19 and rides in slot 23 formed in end plate 21. Leading component 10 of the leading flight bar unit FB1 of the pair illustrated is secured to endless drive chains 24 and 25, and trailing component 19 of flight bar unit FB1 is secured to endless chains 26 and 27.

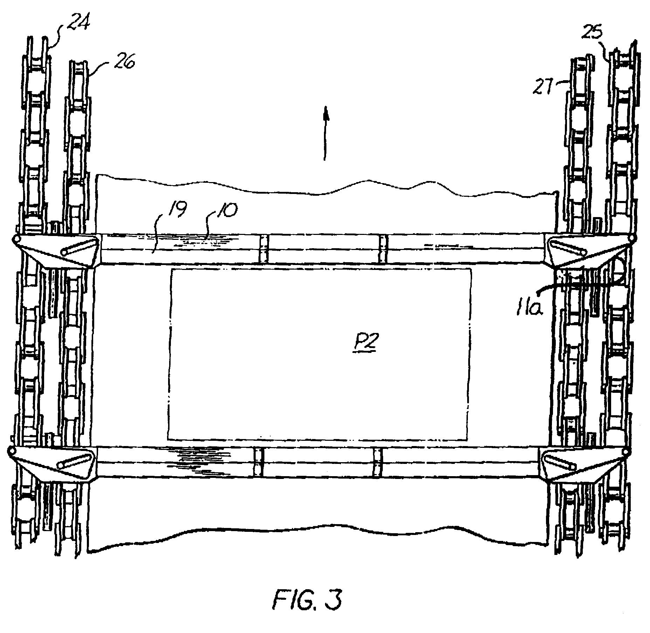

In order to adjust the assembly shown in FIG.2 conveying carton P1 for use in conjunction with the larger carton P2 as shown in FIG.3, the chains 24 and 25 are operated to move relative to the chains elements 26 and 27 while the machine is inoperative so as to increase the spacing between the flight bar units. In this embodiment, both the leading and trailing components 10 and 19 are shifted to become disposed adjacent to or in parallel contacting relation with each other, thereby to adapt the structure as shown in FIG.2 for use with a package P2 as shown in FIG.3. This adjustment of the machine can be effected in an efficient and rapid manner.

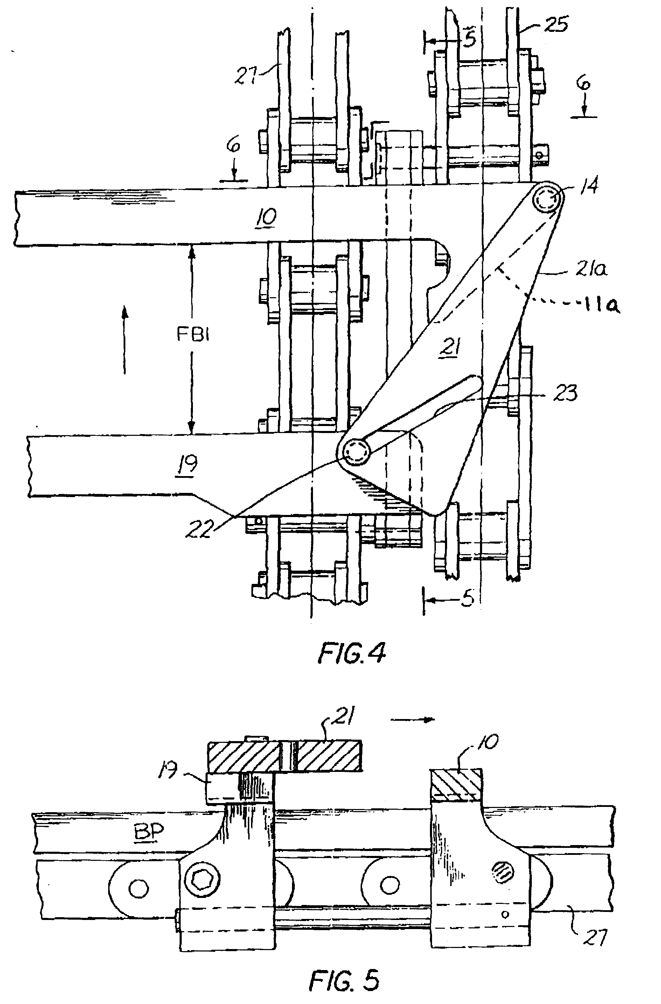

As shown in FIG.3, the edge 11a of the end part of leading component 10 at each of its ends is angled to facilitate an article grouping function by engagement with rows of incoming articles to be loaded and which are moving at an acute angle into the path of movement of the flight bars. This loading arrangement is shown and described in the U.S. patent 4,237,673. However, when the flight bar unit e.g. FB1 is adjusted so that the leading and trailing components 10, 19, respectively, are moved apart, the angled end part is provided by the end face 21a of plate 21 as shown in FIG.4. It will be appreciated that moving the leading and trailing components of the flight bar units apart decreases the spacing between adjacent units and thus adapts the conveying system for use with smaller sized cartons.

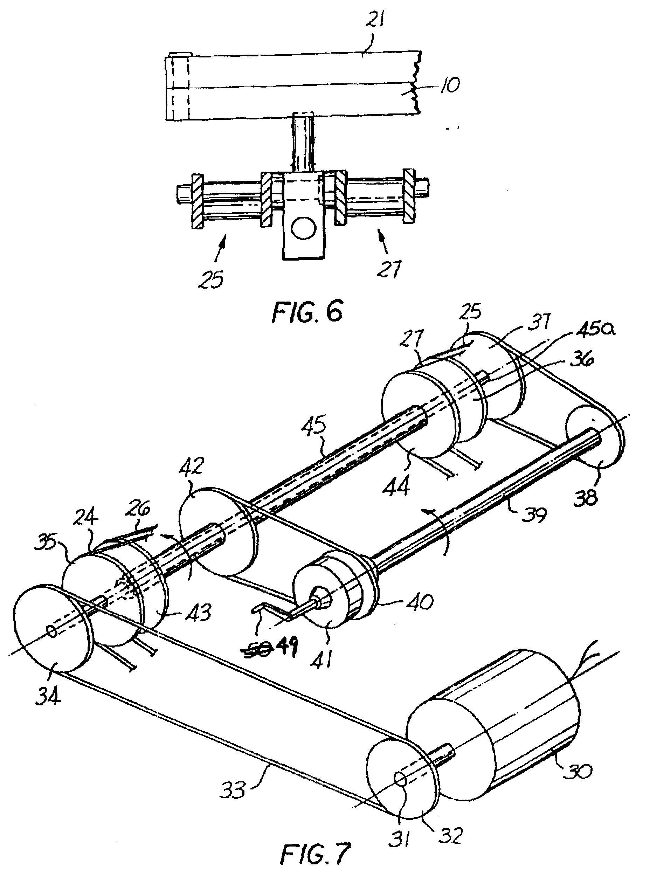

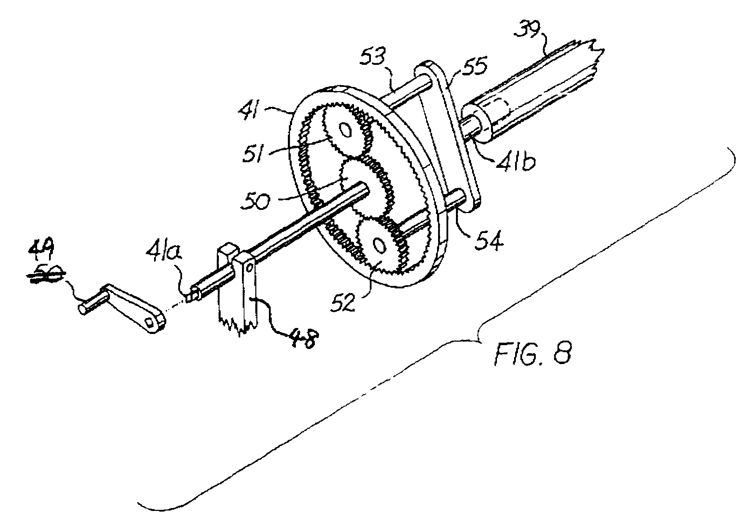

Normal drive and manipulation of the endless drive chains to effect adjustment is provided by the arrangement shown in FIGS. 7 and 8. A drive motor 30 is arranged through its shaft 31 and the sprocket 32 mounted on shaft 31 to drive the driving chain 33 so as to impart rotary motion to driving sprocket 34. The driving sprocket 34 drives sprockets 35, 36 and 37 and chains 24 and 25 through inner shaft 45a. Sprocket 37 drives sprocket 38, shaft 39 and output shaft 41b of gearbox 41.

If input shaft 41a to gearbox 41 is secured against rotation by a clamping bearing 48 then shafts 45 and 45a rotate together with no relative rotation therebetween. Of course, this establishes a static relationship so that chains 24 and 25 do not move relative to chains 26 and 27 and thus the trailing components of each flight bar are held in fixed relation relative to their associated leading components.

When it is desired to condition the system for use in conjunction with the structure shown in FIG.3 from that shown in FIG.2 and vice versa, the clamped condition of input shaft 41a is relieved by loosening clamping bearing 48 which clamps the input shaft 41a against rotation so as to permit rotation. The degree of rotation is effected by means of manually operable crank 49. Schematically represented FIG.8 constitutes a representation of the internal parts of gear box 41. With reference to FIG.8, gearbox 41 includes an internal gear formed on the inside surface of gearbox 41, a sun gear 50 and planetary gears 51 and 52. Rotation of input shaft 41a causes direct rotation of sun gear 50 and hence planetary gears 51 and 52 rotate respectively about shafts 53 and 54. This causes gearbox 41 to rotate about input shaft 41a and at the same time causes planetary gears 51 and 52 themselves to rotate around sun gear 50 in the direction opposite to gearbox 41. Rotation of gearbox 41 causes rotation of sprocket 42 and shaft 45. Shaft 45 as is apparent from FIG.7 rotates sprockets 43 and 44 which in turn controls the movement of chains 26 and 27 thus effecting a shift in position of the trailing components 19. While on the other hand, rotation of planetary gears 51 and 52 around sun gear 50 causes shaft 39 to rotate through shafts 53 and 54 together with a cross member 55. Rotation of shaft 39 then causes rotation of sprockets 38 and 37 and shaft 45a. Shaft 45a rotates sprockets 35 and 36 which in turn controls the movement of chains 24 and 25 thus effecting a shift in position of the leading components 10. Rotations of shafts 45 and 45a resulting from operation of crank 49 are effected in the respective directions opposite to each other, and thus relative movement between the leading and trailing components is effected. In order to effect a shift in position of the leading and trailing components as from that indicated in FIG.2 for example to that indicated in FIG.3, crank 49 is rotated clockwise as viewed in FIGS.7 and 8 to rotate shaft 45a clockwise and shaft 45 counterclockwise. Once the desired shift in position of the leading and trailing components of the flight bars is effected, clamping bearing 48 is tightly secured about input shaft 41a thus precluding further rotation of 41a and causes shafts 45 and 45a to rotate together in the same direction without any relative rotation therebetween. This restores the trailing components in the desired position relative to their associated leading components.

As shown in FIG.7, driving motor 30 is arranged through its shaft 31 and the sprocket 32 mounted on shaft 31 to drive the driving chain 33 so as to impart rotary motion to driving sprocket 34. The driving sprocket 34 drives sprockets 35, 36, and 37 and chains 24 and 25 through inner shaft 45a. Thus sprocket 37 drives sprocket 38, shaft 39 and output shaft 41b of gearbox 41. Input shaft 41a of gearbox 41 is normally restrained as by clamping bearing 48. This causes sprocket 40 which is attached to gear box 41, to rotate but at slightly different speed from shaft 39 thus driving sprocket 42 which is connected to sprockets 43 and 44 and chains 26 and 27 by virtue of the action of hollow shaft 45.

The ratio of the gear box 41 that causes shaft 39 and sprocket 40 to rotate at different speeds is compensated for by the difference in the number of teeth on sprocket 38 and sprocket 40 thus causing hollow shaft 45 to rotate at the same speed as the inner shaft.

In order to impart simultaneous relative movement to all of the leading and trailing components such as 10 and 19. Appropriate rotation of a manually operated control such as crank 49 is effected. Rotation of crank 49 imparts movement to leading and trailing components 10 and 19 through chains 24, 25, 26 and 27 so as to effect rapid and efficient adjustment of the flight bar units for use in conjunction with packages having a wide variety of dimensions. Flight bar plates 15 and 21 also move to change the angle of engagement with the incoming products to be loaded thus to ensure a constant speed of the incoming items prior to engagement with the flight bars.

Although it is normally desirable to adjust all the flight bars simultaneously it is envisaged that a flight bar conveying system according to the invention may be modified by adjusting some, but not all, the flight bars in the series. For example, alternate flight bars only could be adjusted in order to alter the spacing between adjacent flight bars. Moreover, not all the flight bars in the system need be adjustable since as in the example referred to where alternate flight bars only are adjusted, the remaining flight bars may be non-adjustable and/or of some other form.

Other arrangements for controlling the endless chains may alternatively be used in the present invention. One of such arrangements may be the one wherein the first pair of endless chains 24 and 25 are operably connected to a motor through a suitable clutch unit and the second pair of endless chains 26 and 27 are operably connected to the same motor through another suitable clutch unit. Such an arrangement allows the first and second pairs of endless chains to move independently from each other to shift the positions of the leading and trailing components relative to each other.

## Claims

1. A method of adjusting the spacing between an adjacent pair of transversal flight bars (FB1, FB2) in a system for advancing packages sequentially along a predetermined path in which a leading component (10) of at least one of said pair of flight bars is shifted relative to a trailing component (19) thereof so as to alter the distance between the said pair of flight bars (FB1, FB2) **wherein the leading component and the trailing component are adjustably connected together at each of their ends.**

2. A method according to claim 1 wherein said leading and trailing components (10, 19) are **pivotally connected together whereby they are** pivoted towards or away from one another to alter the distance between the flight bars (FB1, FB2).

3. A method according to claim 1 or claim 2 wherein the leading and trailing components (10, 19) remain substantially parallel to one another during said relative shifting.

4. A method according to any of claims 1 to 3 wherein a series of flight bars are adjusted simultaneously.

5. A flight bar assembly for use in advancing packages sequentially along a predetermined path (BP) in which at least one of a pair of adjacent flight bars (FB1, FB2) in the assembly includes a leading component (10) and a trailing component (19) and wherein the leading and trailing components (10, 19) are **adjustably connected to each other at each of their ends** so that they can be shifted relative to one another to adjust the spacing between said pair of flight bars (FB1, FB2).

6. A flight bar assembly according to claim 5 wherein the leading and trailing components (10, 19) are pivotally connected for movement substantially parallel to one another.

7. A system including flight bar assembly according to claim 5 or claim 6 for advancing packages in sequence along a predetermined path (BP) , each of said flight bars (FB1, FB2) having a leading component (10) and a trailing component (19), a first endless driving element (24, 25) connected to each of said leading components to move said leading components along said predetermined path, and a second endless driving element (26, 27) connected to each of said trailing components to move said trailing components along said predetermined path, said first and second driving elements (24, 25 and 26, 27) being movable in synchronism so as to impart movement to packages (P1, P2) along said predetermined path (BP), means (49) for imparting controlled relative movement to said first and second driving elements (24, 25 and 26, 27) so as to vary the distance between the trailing component (19) of a flight bar (FB1) and the leading component (10) of an immediately preceding flight bar (FB2) thereby to render the system adaptable for advancing packages of different horizontal dimensions in the direction of movement of the flight bars (FB1, FB2) along said predetermined path, and characterized by means for interconnecting said leading and trailing components with each other to limit relative movement therebetween within a predetermined range.

8. A system according to claim 7 wherein a plurality of end plates (15, 21) are pivotally connected with each of said flight bar leading components (10) near each end thereof aid a pin (17, 22) is secured to each of said trailing components near each end thereof and wherein each of said end plates (51, 21) includes a slot (16, 23) in which the adjacent pin (17, 22) is slidably disposed.

9. A system according to claim 8 wherein each end of each of said leading components (10) is configured in the from of the correct metering angle for product entry into the space between adjacent flight bars (FB1, FB2).

10. A system according to claim 8 wherein said slot (16, 23) is disposed at all angle which results in the disposition of said end plate (15, 21) in such a position that an edge (21a) of said end plate forms the correct metering angle for product entry into the space between adjacent flight bars (FB1, FB2).

## Patentansprüche

1. Verfahren zum Einstellen des Abstandes zwischen einem benachbarten Paar querverlaufender Schwunghebel (FB1, FB2) in einem System zum Vorwärtsbewegen von Verpackungen der Reihe nach entlang einer vorbestimmten Wegstrecke, in welchem ein Führungsglied (10) wenigstens eines Schwunghebels des Schwunghebel-Paares im Verhältnis zu einem nachlaufenden Glied (19) davon verschoben wird, wobei das Führungsglied und das nachlaufende Glied anjedem ihrer Enden einstellbar miteinander verbunden sind.

2. Verfahren gemäß Anspruch 1, in welchem das Führungsglied und das nachlaufende Glied (10, 19) schwenkbar miteinander verbunden sind, wodurch sie aufeinander zu oder voneinander weg geschwenkt werden, um den Abstand zwischen den Schwunghebeln (FB1, FB2) zu verändern.

3. Verfahren gemäß Anspruch 1 oder Anspruch 2, in welchem das Führungsglied und das nachlaufende Glied (10, 19) während der relativen Verschiebung im wesentlichen parallel zueinander verbleiben.

4. Verfahren gemäß einem der Ansprüche 1 bis 3, in welchem eine Reihe von Schwunghebeln gleichzeitig eingestellt werden.

5. Eine Schwunghebel-Anordnung zur Verwendung beim Vorwärtsbewegen von Verpackungen der Reihe nach entlang einer vorbestimmten Wegstrecke (BP), in welcher wenigstens einer der Schwunghebel eines Paares benachbarter Schwunghebel (FB1, FB2) in der Anordnung ein Führungsglied (10) und ein nachlaufendes Glied (19) einschließt und in welcher das Führungsglied und das nachlaufende Glied (10, 19) an jedem ihrer Enden einstellbar miteinander verbunden sind, so daß sie im Verhältnis zueinander verschoben werden können, um den Abstand zwischen dem Schwunghebel-Paar (FB1, FB2) einzustellen.

6. Eine Schwunghebel-Anordnung gemäß Anspruch 5, in welcher das Führungsglied und das nachlaufende Glied (10, 19) für eine im wesentlichen parallele Bewegung zueinander schwenkbar verbunden sind.

7. Ein System, das zum Vorwärtsbewegen von Verpackungen der Reihe nach entlang einer vorbestimmten Wegstrecke (BP) eine Schwunghebel-Anordnung gemäß Anspruch 5 oder Anspruch 6 beinhaltet, wobei ein jeder der Schwunghebel (FB1, FB2) ein Führungsglied (10) sowie ein nachlaufendes Glied (19) aufweist, ein erstes Endlos-Antriebselement (24, 25), das mit dem Führungsglied verbunden ist, um das Führungsglied entlang der vorbestimmten Wegstrecke zu bewegen, und ein zweites Endlos-Antriebselement (26, 27), das mit dem nachlaufenden Glied verbunden ist, um das nachlaufende Glied entlang der vorbestimmten Wegstrecke zu bewegen, wobei erstes und zweites Antriebselement (24, 25, 26, 27) synchron beweglich sind, um den Verpackungen (P1, P2) entlang der vorbestimmten Wegstrecke (BP) Bewegung zu verleihen, ferner eine Einrichtung (49), um jenem ersten und zweiten Antriebselement (24, 25, 26, 27) eine kontrollierte relative Bewegung zu verleihen, um so den Abstand zwischen dem nachlaufenden Glied eines Schwunghebels (FB1) und dem Führungsglied (10) eines unmittelbar vorausgehenden Schwunghebels (FB2) zu variieren, um dadurch das System anpaßbar zum Vorwärtsbewegen von Verpackungen unterschiedlicher horizontaler Ausmaße in Bewegungsrichtung der Schwunghebel (FB1, FB2) entlang der vorbestimmten Wegstrecke zu machen, und gekennzeichnet durch Mittel zum Miteinander-Verbinden von Führungsglied und nachlaufendem Glied, um die relative Bewegung dazwischen innerhalb eines vorbestimmten Bereichs zu begrenzen.

8. System gemäß Anspruch 7, in welchem eine Vielzahl von Endplatten (15, 21) schwenkbar mit dem Führungsglied (10) des Schwunghebels nahe dessen Ende verbunden ist, und ein Stift (17, 22) an dem nachlaufenden Glied nahe dessen Ende befestigt ist und in welchem jede der Endplatten (15, 21) einen Schlitz (16, 23) beinhaltet, in welchem der angrenzende Stift (17, 22) gleitbar angeordnet ist.

9. System gemäß Anspruch 8, in welchem jedes Ende des Führungsgliedes (10) in Form eines genauen Meßwinkels für den Eintritt eines Produktes in den Zwischenraum zwischen benachbarten Schwunghebeln (FB1, FB2) konfiguriert ist.

10. System gemaß Anspruch 8, in welchem der Schlitz (16, 23) in einem Winkel angeordnet ist, der aus der Anordnung der Endplatte (15, 21) in solch einer Position resultiert, daß eine Kante (21a) der Endplatte den genauen Meßwinkel für den Eintritt der Produkte in den Zwischenraum zwischen benachbarten Schwunghebeln (FB1, FB2) ausbildet.

## Revendications

1. Procédé d'ajustement de l'espacement entre deux barres de transport transversales adjacentes (FB1, FB2) dans un système pour faire avancer des emballages en succession le long d'un trajet prédéterminé, dans lequel un composant de tête (10) d'au moins l'une desdites deux barres de transport est décalé par rapport à un composant de queue (19) de celle-ci afin de modifier la distance entre lesdites deux barres de transport (FB1, FB2), le composant de tête et le composant de queue étant reliés ensemble de manière ajustable à chacune de leurs extrémités.

2. Procédé selon la revendication 1, dans lequel lesdits composants de tête et de queue (10, 19) sont reliés ensemble de manière pivotante, et sont ainsi rapprochés ou éloignés l'un de l'autre par pivotement, afin de modifier la distance entre les barres de transport (FB1, FB2).

3. Procédé selon la revendication 1 ou la revendication 2, dans lequel les composants de tête et de queue (10, 19) restent sensiblement parallèles l'un à l'autre pendant ledit décalage relatif.

4. Procédé selon l'une quelconque des revendications 1 à 3, dans lequel une série de barres de transport est ajustée simultanément.

5. Ensemble de barres de transport destiné à être utilisé pour faire avancer des emballages en succession le long d'un trajet prédéterminé (BP), dans lequel au moins l'une des barres de transport d'une paire de barres de transport adjacentes (FB1, FB2) dans l'ensemble comprend un composant de tête (10) et un composant de queue (19), les composants de tête et de queue (10, 19) étant reliés de manière ajustable l'un à l'autre à chacune de leurs extrémités, afin de pouvoir être décalés l'un par rapport à l'autre pour ajuster l'espacement entre les barres de transport de ladite paire de barres de transport (FB1, FB2).

6. Ensemble de barres de transport selon la revendication 5, dans lequel les composants de tête et de queue (10, 19) sont reliés de manière pivotante pour être déplacés en restant sensiblement parallèles l'un à l'autre.

7. Système comprenant un ensemble de barres de transport selon la revendication 5 ou la revendication 6, pour faire avancer des emballages en succession le long d'un trajet prédéterminé (BP), chacune desdites barres de transport (FB1, FB2) ayant un composant de tête (10) et un composant de queue (19), un premier élément d'entraînement sans fin (24, 25) relié à chacun desdits composants de tête pour déplacer lesdits composants de tête le long dudit trajet prédéterminé, et un second élément d'entraînement sans fin (26, 27) relié à chacun desdits composants de queue pour déplacer lesdits composants de queue le long dudit trajet prédéterminé, lesdits premier et second éléments d'entraînement (24, 25 et 26, 27) pouvant être déplacés de manière synchrone afin d'imprimer un mouvement aux emballages (P2) le long dudit trajet prédéterminé (BP), des moyens (49) pour imprimer un mouvement relatif commandé auxdits premier et second éléments d'entraînement (24, 25 et 26, 27) afin de faire varier la distance entre le composant de queue (19) d'une barre de transport (FB1) et le composant de tête (10) d'une barre de transport (FB2) immédiatement précédente, pour rendre ainsi le système adaptable pour faire avancer des emballages de dimensions horizontales différentes dans la direction de déplacement des barres de transport (FB1, FB2) le long dudit trajet prédéterminé, et caractérisé par des moyens pour relier entre eux lesdits composants de tête et de queue de façon à limiter le déplacement relatif entre ceux-ci dans une plage prédéterminée.

8. Système selon la revendication 7, dans lequel plusieurs plaques d'extrémité (15, 21) sont reliées de manière pivotante à chacun desdits composants de tête (10) des barres de transport, près de chaque extrémité de ceux-ci, et un ergot (17, 22) est fixé à chacun desdits composants de queue près de chaque extrémité de ceux-ci et dans lequel chacune desdites plaques d'extrémité (51, 21) comprend une fente (16, 23) dans laquelle est disposé, de manière coulissante, l'ergot adjacent (17, 22).

9. Système selon la revendication 8, dans lequel chaque extrémité de chacun desdits composants de tête (10) est configurée sous la forme de l'angle de métrage correct pour l'entrée du produit dans l'espace entre des barres de transport adjacentes (FB1, FB2).

10. Système selon la revendication 8, dans lequel ladite fente (16, 23) est disposée suivant un angle conduit à la disposition de ladite plaque d'extrémité (15, 21) dans une position telle, qu'un bord (11a) de ladite plaque d'extrémité forme l'angle de métrage correct pour l'entrée du produit dans l'espace entre des barres de transport adjacentes (FB1, FB2).
